# FASCICULE DE BREVET EUROPEEN

(11) **EP 3 273 831 B1**
(45) Date de publication et mention de la délivrance du brevet: **10.04.2019**
(21) Numéro de dépôt: 16714503.6
(22) Date de dépôt: 24.03.2016
(51) Int. Cl.: A47J 37/10, A47J 45/06, A47J 45/07

(54) **DISPOSITIF DE GESTION DE LA CUISSON MUNI D'UN SYSTEME DE RECONNAISSANCE D'UN RECIPIENT DE CUISSON**
MIT EINEM KOCHBEHÄLTERERKENNUNGSSYSTEM AUSGESTATTETE KOCHVERWALTUNGSVORRICHTUNG
COOKING MANAGEMENT DEVICE PROVIDED WITH A COOKING VESSEL RECOGNITION SYSTEM

(30) Priorité: 27.03.2015 FR 1552639
(43) Date de publication de la demande: 31.01.2018
(73) Titulaire: SEB S.A., 69130 Ecully (FR)
(72) Inventeur: MILLS, Claire, 74000 Annecy (FR); GAILHARD, Thierry, 69970 Chaponnay (FR)
(74) Mandataire: Bourrières, Patrice
(86) Numéro de dépôt international: PCT/FR2016/050666
(87) Numéro de publication internationale: WO 2016/156710

(56) Documents cités:
- WO-A2-2004/008923
- US-B2- 6 860 192

## Description

La présente invention concerne un dispositif de gestion de la cuisson d'aliments destiné à être agencé de manière amovible sur un récipient de cuisson coopérant avec une plaque de chauffe, le récipient de cuisson étant notamment une poêle, une casserole, un faitout ou un autocuiseur. L'invention concerne également un ensemble comprenant au moins un récipient de cuisson et un dispositif de gestion de la cuisson.

On connaît du document US6860192 un dispositif de gestion de la cuisson d'aliments destiné à être agencé de manière amovible sur un récipient de cuisson, notamment une poêle, coopérant avec une plaque de chauffe. Le dispositif de gestion de la cuisson est conçu pour émettre des signaux destinés à commander la plaque de chauffe. L'utilisateur peut adapter le dispositif de gestion de la cuisson à la taille de la poêle en agissant manuellement sur une interface pour adapter les signaux émis en fonction de la taille du récipient de cuisson. Cependant, un tel dispositif de gestion de la cuisson oblige l'utilisateur à bien vérifier lors de son adaptation sur un récipient de cuisson que celui-ci est bien paramétré pour la bonne taille du récipient de cuisson utilisé. Si ce n'est pas le cas, les signaux émis lors de la cuisson ne seront pas adaptés à la taille de récipient et le résultat de cuisson ne sera pas celui escompté.

Le but de la présente invention est de remédier aux inconvénients précités et de proposer un dispositif de gestion de la cuisson qui permette de garantir le résultat de cuisson d'un aliment, notamment en présentant une ergonomie améliorée.

Un autre but de l'invention est de proposer un dispositif de gestion de la cuisson qui présente un fonctionnement fiable et répétitif, durable dans le temps.

Un autre but de l'invention est de proposer un dispositif de gestion de la cuisson qui soit de conception simple et économique à mettre en oeuvre.

Ces buts sont atteints avec un dispositif de gestion de la cuisson destiné à être agencé de manière amovible sur un récipient de cuisson d'aliments coopérant avec une plaque de chauffe, le dispositif de gestion de la cuisson étant conçu pour émettre des signaux destinés soit à commander la plaque de chauffe soit à inviter l'utilisateur à agir sur la plaque de chauffe et/ou sur les aliments en cours de cuisson, caractérisé en ce que le dispositif de gestion de la cuisson comporte un système de reconnaissance du type et/ou de la taille du récipient de cuisson sur lequel il est agencé, ledit système de reconnaissance agissant sur le dispositif de gestion de la cuisson pour adapter les signaux émis en fonction du type et/ou de la taille du récipient de cuisson reconnu.

Par un dispositif de gestion de la cuisson destiné à être agencé de manière amovible sur un récipient de cuisson, on comprend que le dispositif de gestion de la cuisson peut être séparé facilement par l'utilisateur du récipient de cuisson, sans nécessiter la mise en oeuvre d'un outil.

Par le système de reconnaissance agit sur le dispositif de gestion de la cuisson pour adapter les signaux émis en fonction du type et/ou de la taille du récipient de cuisson reconnu, on comprend qu'à minima, le signal émis par le dispositif de gestion de la cuisson correspond au type et/ou à la taille du récipient de cuisson qui sera traité par un dispositif externe au dispositif de gestion de la cuisson, notamment un dispositif de commande d'une plaque de chauffe qui adapte la puissance de chauffe en fonction du type et/ou de la taille du récipient reconnu.

Le dispositif de gestion de la cuisson reconnait de manière autonome le type et/ou la taille du récipient de cuisson sur lequel il est agencé. Ainsi, Les signaux émis par le dispositif de gestion de la cuisson sont toujours adaptés au type et/ou à la taille du récipient de cuisson reconnu. En conséquence, les signaux émis sont fiables et le résultat de cuisson d'un aliment est garanti.

Avantageusement, le système de reconnaissance comporte une mémoire dans laquelle est stocké une table comprenant des plages de valeurs d'une caractéristique du récipient de cuisson associées chacune à un type et/ou une taille du récipient de cuisson et le système de reconnaissance est conçu pour détecter une valeur de la caractéristique du récipient de cuisson et en déduire le type et/ou la taille du récipient de cuisson sur lequel il est installé à partir des plages de valeurs stockées dans la mémoire, ladite caractéristique étant notamment électrique et/ou mécanique et/ou optique.

A chaque plage de valeurs mémorisée est associé un type et/ou une taille de récipient de cuisson. Lorsque le système de reconnaissance détecte une valeur d'une caractéristique du récipient de cuisson qui entre dans une plage de valeurs, le dispositif de gestion de la cuisson en déduit le type et/ou la taille du récipient de cuisson qui est associé à cette plage de valeurs.

Ainsi, le dispositif de gestion de la cuisson identifie le type et/ou la taille du récipient de cuisson de manière fiable.

Par ladite caractéristique étant électrique, on comprend que le système de reconnaissance détecte une caractéristique choisie parmi une valeur ohmique, une tension, une intensité ou une capacité.

De préférence, il comporte un émetteur d'ondes radio, notamment du type Bluetooth®, pour émettre les signaux destinés soit à commander la plaque de chauffe soit à inviter l'utilisateur à agir sur la plaque de chauffe et/ou sur les aliments en cours de cuisson.

Une telle disposition permet d'obtenir un dispositif de gestion de la cuisson sans fil qui peut être facilement installé successivement sur différents récipients de cuisson.

De manière avantageuse, le dispositif de gestion peut coopérer avec un terminal distant, notamment un smartphone qui reçoit les signaux destinés à inviter l'utilisateur à agir sur la plaque de chauffe et/ou sur les aliments en cours de cuisson.

Avantageusement, il comporte un afficheur et/ou des moyens sonores pour inviter l'utilisateur à agir sur la plaque de chauffe ou sur les aliments en cours de cuisson.

Une telle disposition permet d'obtenir un dispositif de gestion de la cuisson muni d'une interface particulièrement économique pour afficher des informations invitant l'utilisateur à agir sur la plaque de chauffe ou sur les aliments en cours de cuisson. Des moyens sonores, notamment un buzzer, complètent de manière avantageuse les informations visuelles affichées.

De manière avantageuse, l'afficheur affiche un pictogramme représentant le type et/ou la taille de récipient de cuisson sur lequel le dispositif de gestion de la cuisson est agencé, le type et/ou la taille de récipient de cuisson étant reconnu par le système de reconnaissance.

De préférence, il comporte un organe de mise en marche, le système de reconnaissance étant activé lors de la mise en marche.

Une telle disposition permet à chaque mise en marche du dispositif de gestion de la cuisson de redétecter le type et/ou la taille du récipient de cuisson et ainsi, garantir que les signaux émis par le dispositif de gestion de la cuisson sont bien adaptés au type et/ou à la taille du récipient de cuisson sur lequel il est installé.

Avantageusement, il comporte des moyens de connexion, notamment des plots, relié au système de reconnaissance, les moyens de connexion étant destinés à coopérer avec un composant électrique agencé sur le récipient de cuisson, notamment un capteur de température ou une résistance.

Ainsi, le système de reconnaissance est relié électriquement et de manière amovible à un composant électrique agencé sur le récipient de cuisson qui présente une caractéristique propre au type et ou à la taille du récipient de cuisson.

Une telle disposition permet également au dispositif de gestion de la cuisson d'adapter les signaux émis en fonction des mesures réalisées sur le capteur.

De préférence, des valeurs et/ou des courbes de puissance en fonction du type et/ou de la taille du récipient de cuisson sont stockées dans la mémoire, les signaux émis étant des consignes de puissance.

Une telle disposition permet d'adapter les signaux de consignes de puissance émis en fonction du type et/ou de la taille du récipient de cuisson reconnu.

L'invention se rapporte également à un ensemble formé par au moins un récipient de cuisson et un dispositif de gestion de la cuisson tel que décrit ci-dessus.

Avantageusement le récipient de cuisson comporte une poignée, le dispositif de gestion de la cuisson étant agencé sur la poignée.

Par poignée, on comprend que la poignée peut être une poignée longue agencée sur une poêle ou une anse agencée sur une casserole ou un faitout.

Une telle disposition permet de réaliser de manière économique un dispositif de gestion de la cuisson qui peut être installé sur un ensemble de récipient de cuisson. En effet, dans une gamme de récipient de cuisson de tailles différentes, la poignée est identique pour chaque taille. De plus, la zone d'assemblage du dispositif de la gestion de cuisson sur la poignée est identique pour chaque récipient de cuisson.

De préférence, le récipient de cuisson comporte un composant électrique présentant une caractéristique électrique R1 définissant le type et/ou la taille du récipient de cuisson, le système de reconnaissance étant adapté à mesurer la caractéristique électrique R1 pour reconnaitre le type et/ou la taille du récipient de cuisson.

Avantageusement, le composant électrique est formé par une résistance électrique et/ou un capteur de température, notamment un thermocouple, et la caractéristique électrique est une valeur ohmique.

Une telle disposition permet d'obtenir un dispositif de gestion de cuisson très économique. Une résistance électrique est en effet un composant standard, à bas coût. L'utilisation du capteur de température, notamment d'un thermocouple équipant le récipient de cuisson ne met pas en oeuvre un composant particulier pour détecter le type et/ou la taille de ce récipient de cuisson et est donc particulièrement économique.

De préférence, le récipient comporte un composant mécanique présentant une caractéristique mécanique C1 définissant le type et/ou la taille du récipient de cuisson, le système de reconnaissance étant adapté à mesurer la caractéristique mécanique C1 pour reconnaitre le type et/ou la taille du récipient de cuisson.

Une telle disposition permet d'obtenir un dispositif de gestion de cuisson fiable et robuste dans le temps.

Avantageusement, le composant mécanique est formé par au moins un plot, et la caractéristique mécanique est la présence ou l'absence du plot.

Une telle disposition permet à partir d'un nombre limité de plots d'obtenir un grand nombre de combinaisons, chaque combinaison caractérisant un type et/ou une taille de récipient de cuisson.

L'invention se rapporte également à un ensemble formé par une plaque de chauffe, au moins un récipient de cuisson et un dispositif de gestion de la cuisson tels que décrit ci-dessus.

La plaque de chauffe comporte des moyens de réception des signaux émis par le dispositif de gestion de la cuisson, les moyens de réception agissant sur des moyens de commande de la plaque de chauffe.

L'invention se rapporte également à un procédé de gestion de la cuisson d'un aliment disposé dans un récipient de cuisson d'aliments coopérant avec une plaque de chauffe, ledit récipient de cuisson comportant un dispositif de gestion de la cuisson conçu pour émettre des signaux destinés soit à commander la plaque de chauffe soit à inviter l'utilisateur à agir sur la plaque de chauffe et/ou sur les aliments en cours de cuisson, caractérisé en ce que le procédé comporte une étape de reconnaissance par le dispositif de gestion de la cuisson du type et/ou de la taille du récipient de cuisson sur lequel il est agencé, ledit dispositif de gestion de la cuisson comportant un système de reconnaissance agissant sur le dispositif de gestion de la cuisson pour adapter les signaux émis en fonction du type et/ou de la taille du récipient de cuisson reconnu.

L'invention sera mieux comprise à l'étude des modes de réalisation pris à titre nullement limitatif et illustrés dans les figures annexées dans lesquelles :
- La figure 1 illustre une vue schématique en coupe d'un récipient de cuisson reposant sur une plaque de chauffe et comportant un dispositif de gestion de la cuisson selon un mode particulier de réalisation de l'invention.
- La figure 2 illustre une vue en perspective du récipient de cuisson comportant le dispositif de gestion de la cuisson illustré à la figure 1.
- La figure 3 illustre une vue en perspective éclatée de la poignée du récipient de cuisson comportant le dispositif de gestion de la cuisson illustré à la figure 2.
- La figure 4 illustre une vue en perspective éclatée partielle de la poignée du récipient de cuisson comportant le dispositif de gestion de la cuisson illustré à la figure 3 selon une variante de réalisation de l'invention.

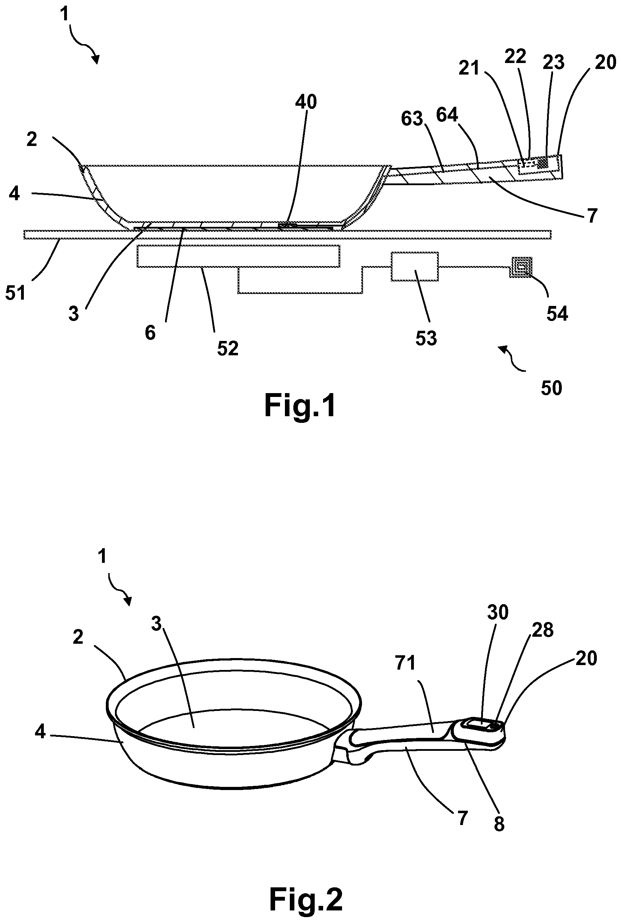

Tel que visible aux figures 1 à 3, un récipient de cuisson 1 comporte une calotte 2 qui comprend un fond 3 et une paroi latérale 4. La calotte 2 est réalisée en un matériau amagnétique, notamment en aluminium, par exemple par une opération de frappe d'un disque ou par une opération de fonderie. Le fond 3 présente une épaisseur dans laquelle est rapporté un capteur de température 40, notamment un thermocouple. Le récipient de cuisson 1 comporte une poignée 7 dans laquelle est agencé de manière détachable un dispositif de gestion de la cuisson 20. Le dispositif de gestion de la cuisson 20 est relié, par exemple électriquement, au capteur de température 40 pour recevoir des informations représentatives de la température du fond 3.

Le récipient de cuisson 1 repose sur une plaque de chauffe 50 notamment à résistances chauffantes électriques ou à induction qui comprend une plaque vitrocéramique 51, un dispositif de chauffe 52, notamment un pot chauffant ou un inducteur et un dispositif de commande 53. Le fond 3 de la calotte 2 comporte un élément 6 réalisé en un matériau ferromagnétique destiné, par exemple, à coopérer avec l'inducteur du dispositif de chauffe 52 pour faire chauffer le récipient de cuisson 1. L'élément 6 réalisé en un matériau ferromagnétique prend la forme d'une plaque qui est rapportée de manière à coiffer le capteur de température 40.

Le dispositif de gestion de la cuisson 20 comporte un émetteur d'ondes radio 23, notamment du type Bluetooth®, pour émettre des signaux destinés à commander la plaque de chauffe 50, notamment à partir des informations reçues du capteur de température 40. Le dispositif de commande 53 de la plaque de chauffe 50 comporte un récepteur 54 pour recevoir les signaux émis par le dispositif de gestion de la cuisson 20 pour piloter la plaque de chauffe 50. Les signaux émis sont par exemple, des consignes de puissance à fournir par le dispositif de chauffe 52 au récipient de cuisson 1.

Le dispositif de gestion de la cuisson 20 comporte un système de reconnaissance 21 du type et de la taille du récipient de cuisson sur lequel il est agencé. Le système de reconnaissance 21 agit sur le dispositif de gestion de la cuisson 20 pour adapter les signaux émis en fonction du type et de la taille du récipient de cuisson 1 reconnu.

Le dispositif de gestion de la cuisson 20 est destiné à coopérer avec des récipients de cuisson de type et de taille différents comportant chacun un capteur de température 40, notamment un thermocouple présentant une plage de résistance propre et qui sera caractéristique du type et de la taille du récipient de cuisson. Le système de reconnaissance 21 comporte une mémoire 22 dans laquelle sont stockées les plages de valeurs de résistance associées chacune à un type et une taille de récipient de cuisson. Le système de reconnaissance 21 est conçu pour détecter la valeur de résistance du thermocouple et, à partir des plages de valeurs mémorisées associés chacune à un type et une taille de récipient de cuisson, identifier le type et la taille du récipient de cuisson 1 sur lequel il est agencé.

Le dispositif de gestion de la cuisson 20 comporte un bouton marche/arrêt 28. A chaque mise en marche, le système de reconnaissance 21 est activé pour détecter le type et la taille du récipient de cuisson sur lequel le dispositif de gestion de la cuisson 20 est installé.

Le dispositif de gestion de cuisson 20 est conçu pour adapter les signaux émis en fonction du type et de la taille du récipient de cuisson 1 reconnu. Les signaux émis, par exemple des consignes de puissance à fournir par le dispositif de chauffe 52 au récipient de cuisson 1, seront modulés par un coefficient mémorisé correspondant au type et à la taille du récipient de cuisson 1.

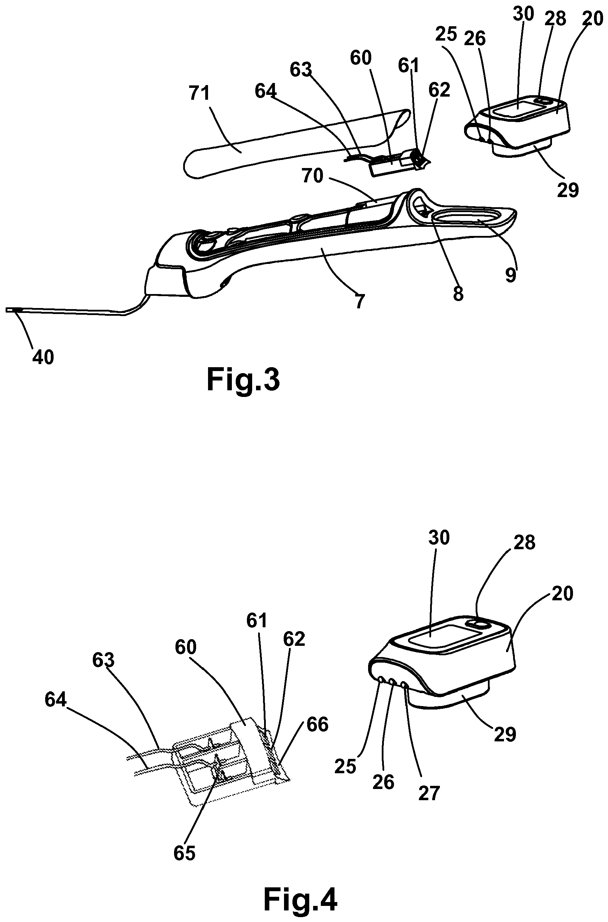

Tel que visible à la figure 3, la poignée 7 comporte une cavité 70 dans laquelle est agencé un connecteur 60. La cavité 70 est fermée par un capot 71. Le connecteur 60 est muni d'une première 61 et deuxième 62 zones de contact. Les première 61 et deuxième 62 zones de contact sont reliées au capteur de température 40 par deux éléments conducteurs 63, 64. Le dispositif de gestion de la cuisson 20 comporte un premier 25 et deuxième 26 plots reliés au système de reconnaissance 21 et destinés à coopérer avec les première 61 et deuxième 62 zones de contact. La poignée 7 comporte un logement 8 muni d'une ouverture 9 traversante. Le dispositif de gestion de la cuisson 20 comporte un pied 29 destiné à coopérer avec l'ouverture 9 traversante pour maintenir le dispositif de gestion de la cuisson 20 sur la poignée 7, ainsi que les premier 25 et deuxième 26 plots en contact avec les première 61 et deuxième 62 zones de contact. Le pied 29 peut recevoir une batterie d'alimentation (non représentée sur les figures) du dispositif de gestion de la cuisson 20.

Avantageusement, l'ouverture 9 traversante est destinée à former un anneau d'accrochage du récipient de cuisson 1.

Dans une variante de réalisation, le dispositif de gestion de la cuisson 20 comporte un afficheur 30 pour inviter l'utilisateur à agir sur la plaque de chauffe 50 ou sur les aliments en cours de cuisson. L'afficheur 30 peut, par exemple, afficher une consigne de réglage de la puissance de chauffe que l'utilisateur est invité à lire pour ensuite modifier le réglage de la plaque de chauffe 50. Le système de reconnaissance 21 agit sur le dispositif de gestion de la cuisson 20 pour adapter la consigne de réglage de la puissance de chauffe affichée en fonction du type et de la taille du récipient de cuisson 1 reconnu. Le dispositif de gestion de la cuisson 20 comporte avantageusement des moyens sonores, notamment un buzzer (non représenté sur les figures) pour alerter l'utilisateur et l'inviter à regarder l'afficheur 30.

Dans une autre variante de réalisation illustrée à la figure 4, le dispositif de gestion de la cuisson 20 est destiné à coopérer avec des récipients de cuisson de type et de taille différents comportant chacun une résistance 65 présentant une valeur ohmique propre et qui sera caractéristique du type et de la taille du récipient de cuisson. Le système de reconnaissance 21 comporte une mémoire 22 dans laquelle sont stockées les valeurs ohmiques associées chacune à un type et une taille de récipient de cuisson. Le système de reconnaissance 21 est conçu pour détecter la valeur ohmique de la résistance et, à partir des plages de valeurs ohmiques mémorisées associées chacune à un type et une taille de récipient de cuisson, identifier le type et la taille du récipient de cuisson. Le connecteur 60 comporte une troisième zone de contact 66 électrique et la résistance 65 est reliée aux deuxième 62 et troisième 66 zones de contact. Le dispositif de gestion de la cuisson 30 comporte un troisième plot 27 relié au système de reconnaissance 21 et destiné à coopérer avec la troisième zone de contact 66. En utilisation, l'utilisateur choisit un récipient de cuisson 1 adapté à la taille et/ou au type d'aliments qu'il souhaite préparer et il adapte sur ce récipient de cuisson le dispositif de gestion de la cuisson 20. L'utilisateur met ensuite en marche le dispositif de gestion de la cuisson 20, ce qui active le système de reconnaissance 21 qui détecte la valeur de résistance du capteur de température 40. Le système de reconnaissance 21 détermine alors le type et la taille du récipient de cuisson sur lequel il est agencé, à partir des plages de valeurs stockées dans sa mémoire 22 et associées chacune à un type et une taille de récipient de cuisson. L'utilisateur pose alors le récipient de cuisson 1 sur la plaque de chauffe 50 qu'il a préalablement mise en marche. Lors de la préparation des aliments le dispositif de gestion de la cuisson des aliments 20 va émettre des consignes de puissance à fournir par le dispositif de chauffe 52 au récipient de cuisson 1 qui seront modulées par un coefficient mémorisé correspondant au type et à la taille du récipient de cuisson 1.

Par exemple, le dispositif de gestion de la cuisson 20 comporte une fonction « mijotage ». Par exemple, lors de la préparation d'un boeuf bourguignon pour 4 personnes dans une casserole adaptée à une telle préparation, soit une casserole de diamètre 20 centimètres, la consigne de puissance à fournir par le dispositif de chauffe 52 à la casserole, émise par le dispositif de gestion de la cuisson 20 pour réaliser un mijotage est de 330 watts. Si le dispositif de gestion de la cuisson 20 est agencé sur une casserole de diamètre 16 centimètres, la demanderesse a mis en évidence que la quantité d'aliments préparés était inférieure à au moins la moitié de la quantité préparée dans une casserole de diamètre 20 centimètres. Ainsi pour la fonction « mijotage » dans une casserole de diamètre 16 centimètres, la consigne de puissance à fournir par le dispositif de chauffe à la casserole, émise par le dispositif de gestion de la cuisson est de 215 watts.

Dans une variante de réalisation, le dispositif de gestion de la cuisson des aliments 20 va émettre un signal correspondant au type et à la taille du récipient de cuisson 1 qui sera enregistré par le dispositif de commande 53 de la plaque de chauffe 50, ainsi qu'une information représentative de la température du fond 3. Le dispositif de commande 53 comporte des consignes de puissance à fournir par le dispositif de chauffe 52 au récipient de cuisson 1 qui seront modulées par un coefficient enregistré correspondant au type et à la taille du récipient de cuisson 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le dispositif de gestion de la cuisson 20 est agencé sur un accessoire d'un récipient de cuisson 1, notamment un couvercle. Le système de reconnaissance 21 détecte la taille de l'accessoire sur lequel il est agencé, la taille de l'accessoire correspondant à une taille de récipient de cuisson.

## Revendications

1. Dispositif de gestion de la cuisson (20) d'aliments destiné à être agencé de manière amovible sur un récipient de cuisson (1) coopérant avec une plaque de chauffe (50), ledit dispositif de gestion de la cuisson (20) étant conçu pour émettre des signaux destinés soit à commander la plaque de chauffe (50) soit à inviter l'utilisateur à agir sur la plaque de chauffe (50) et/ou sur les aliments en cours de cuisson, **caractérisé en ce que** le dispositif de gestion de la cuisson (20) comporte un système de reconnaissance (21) du type et/ou de la taille du récipient de cuisson (1) sur lequel il est agencé, ledit système de reconnaissance (21) agissant sur le dispositif de gestion de la cuisson (20) pour adapter les signaux émis en fonction du type et/ou de la taille du récipient de cuisson (1) reconnu.

2. Dispositif de gestion de la cuisson (20) selon la revendication 1, **caractérisé en ce que** le système de reconnaissance (21) comporte une mémoire (22) dans laquelle est stocké une table comprenant des plages de valeurs d'une caractéristique du récipient de cuisson associées chacune à un type et/ou une taille du récipient de cuisson et **en ce que** le système de reconnaissance (21) est conçu pour détecter une valeur de la caractéristique du récipient de cuisson (1) et en déduire le type et/ou la taille du récipient de cuisson sur lequel il est installé à partir des plages de valeurs stockées dans la mémoire (22), ladite caractéristique étant notamment électrique et/ou mécanique et/ou optique.

3. Dispositif de gestion de la cuisson (20) selon l'une quelconque des revendications précédentes, **caractérisé en ce qu'**il comporte un émetteur d'ondes radio (23), notamment du type Bluetooth®, pour émettre les signaux destinés soit à commander la plaque de chauffe (50), soit à inviter l'utilisateur à agir sur la plaque de chauffe (50) et/ou sur les aliments en cours de cuisson.

4. Dispositif de gestion de la cuisson (20) selon l'une quelconque des revendications précédentes, **caractérisé en ce qu'**il comporte un afficheur (30) et/ou des moyens sonores pour inviter l'utilisateur à agir sur la plaque de chauffe (50) ou sur les aliments en cours de cuisson.

5. Dispositif de gestion de la cuisson (20) selon l'une quelconque des revendications précédentes, **caractérisé en ce qu'**il comporte un organe de mise en marche (28), le système de reconnaissance (21) étant activé lors de la mise en marche.

6. Dispositif de gestion de la cuisson (20) selon l'une quelconque des revendications 2 à 5, **caractérisé en ce qu'**il comporte des moyens de connexion, notamment des plots (25, 26, 27), relié au système de reconnaissance, lesdits moyens de connexion étant destinés à coopérer avec un composant électrique agencé sur le récipient de cuisson, notamment un capteur de température (40) ou une résistance (65).

7. Dispositif de gestion de la cuisson (20) selon l'une quelconque des revendications 2 à 6, **caractérisé en ce que** des valeurs et/ou des courbes de puissance en fonction du type et/ou de la taille du récipient de cuisson sont stockées dans la mémoire (22), les signaux émis étant des consignes de puissance.

8. Ensemble formé par au moins un récipient de cuisson (1) et un dispositif de gestion de la cuisson (20) selon l'une quelconque des revendications précédentes.

9. Ensemble selon la revendication 8, **caractérisé en ce que** le récipient de cuisson (1) comporte une poignée (7), le dispositif de gestion de la cuisson (20) étant agencé sur la poignée (7).

10. Ensemble selon l'une quelconque des revendications 8 à 9, **caractérisé en ce que** le récipient de cuisson (1) comporte un composant électrique (40, 65) présentant une caractéristique électrique R1 définissant le type et/ou la taille du récipient de cuisson (1), le système de reconnaissance (21) étant adapté à mesurer la caractéristique électrique R1 pour reconnaitre le type et/ou la taille du récipient de cuisson (1).

11. Ensemble selon la revendication 10, **caractérisé en ce que** le composant électrique est formé par une résistance électrique (65) ou un capteur de température (40), notamment un thermocouple, et **en ce que** la caractéristique électrique R1 est une valeur ohmique.

12. Ensemble selon l'une quelconque des revendications 8 à 9, **caractérisé en ce que** le récipient de cuisson (1) comporte un composant mécanique présentant une caractéristique mécanique C1 définissant le type et/ou la taille du récipient de cuisson (1), le système de reconnaissance (21) étant adapté à mesurer la caractéristique mécanique C1 pour reconnaitre le type et/ou la taille du récipient de cuisson (1).

13. Ensemble selon la revendication 12, **caractérisé en ce que** le composant mécanique est formé par au moins un plot, et **en ce que** la caractéristique mécanique est la présence ou l'absence du plot.

14. Ensemble formé par une plaque de chauffe (50), au moins un récipient de cuisson (1) et un dispositif de gestion de la cuisson (20) selon l'une quelconque des revendications précédentes.

15. Procédé de gestion de la cuisson d'un aliment disposé dans un récipient de cuisson (1) d'aliments coopérant avec une plaque de chauffe (50), ledit récipient de cuisson (1) comportant un dispositif de gestion de la cuisson (20) conçu pour émettre des signaux destinés soit à commander la plaque de chauffe (50) soit à inviter l'utilisateur à agir sur la plaque de chauffe (50) et/ou sur les aliments en cours de cuisson, **caractérisé en ce que** le procédé comporte une étape de reconnaissance par le dispositif de gestion de la cuisson (20) du type et/ou de la taille du récipient de cuisson (1) sur lequel il est agencé, ledit dispositif de gestion de la cuisson (20) comportant un système de reconnaissance (21) qui agit sur le dispositif de gestion de la cuisson (20) pour adapter les signaux émis en fonction du type et/ou de la taille du récipient de cuisson (1) reconnu.

## Patentansprüche

1. Vorrichtung zum Kochmanagement (20) von Lebensmitteln, die dazu bestimmt ist, abnehmbar auf einem Kochgefäß (1) angeordnet zu werden, das mit einer Heizplatte (50) zusammenwirkt, wobei die Vorrichtung zum Kochmanagement (20) eingerichtet ist, Signale auszusenden, die dazu bestimmt sind, entweder die Heizplatte (50) zu steuern oder den Benutzer aufzufordern, auf die Heizplatte (50) und / oder die Lebensmittel, die gerade gekocht werden, einzuwirken, **dadurch gekennzeichnet, dass** die Vorrichtung zum Kochmanagement (20) ein Erkennungssystem (21) des Typs und / oder der Größe des Kochgefäßes (1) aufweist, auf dem es angeordnet ist, wobei das Erkennungssystem (21) auf die Vorrichtung zum Kochmanagement (20) einwirkt, um die ausgesendeten Signale als Funktion des Typs und / oder der Größe des erkannten Kochgefäßes (1) anzupassen.

2. Vorrichtung zum Kochmanagement (20) nach Anspruch 1, **dadurch gekennzeichnet, dass** das Erkennungssystem (21) einen Speicher (22) aufweist, in dem eine Tabelle gespeichert ist, die Wertebereiche einer Charakteristik des Kochgefäßes umfasst, die jeweils einem Typ und / oder einer Größe des Kochgefäßes zugeordnet sind, und dass das Erkennungssystem (21) dazu eingerichtet ist, einen Wert der Eigenschaft des Kochgefäßes (1) zu erfassen, und auf den Typ und / oder die Größe des Kochgefäßes, auf dem es installiert ist, ausgehend von den im Speicher (22) gespeicherten Wertebereichen zu schließen, wobei diese Charakteristik insbesondere elektrisch und / oder mechanisch und / oder optisch ist.

3. Vorrichtung zum Kochmanagement (20) nach einem der vorstehenden Ansprüche, **dadurch gekennzeichnet, dass** sie einen Funkwellensender (23), insbesondere vom Typ Bluetooth®, aufweist, um die Signale auszusenden, die dazu bestimmt sind, entweder die Heizplatte (50) zu steuern, oder den Benutzer aufzufordern, auf die Heizplatte (50) und / oder auf die Lebensmittel, die gerade gekocht werden, einzuwirken.

4. Vorrichtung zum Kochmanagement (20) nach einem der vorstehenden Ansprüche, **dadurch gekennzeichnet, dass** sie eine Anzeige (30) und / oder akustische Mittel aufweist, um den Benutzer aufzufordern, auf die Heizplatte (50) oder auf die Lebensmittel einzuwirken, die gerade gekocht werden.

5. Vorrichtung zum Kochmanagement (20) nach einem der vorstehenden Ansprüche, **dadurch gekennzeichnet, dass** sie ein Startelement (28) aufweist, wobei das Erkennungssystem (21) beim Start aktiviert ist.

6. Vorrichtung zum Kochmanagement (20) nach einem der Ansprüche 2 bis 5, **dadurch gekennzeichnet, dass** sie Verbindungsmittel, insbesondere Blöcke (25, 26, 27), die mit dem Erkennungssystem verbunden sind, aufweist, wobei die Verbindungsmittel, dazu bestimmt sind, mit einer an dem Kochgefäß angeordneten elektrischen Komponente, insbesondere einem Temperatursensor (40) oder einem Widerstand (65), zusammenzuwirken.

7. Vorrichtung zum Kochmanagement (20) nach einem der Ansprüche 2 bis 6, **dadurch gekennzeichnet, dass** Werte und / oder Leistungskurven in Abhängigkeit von der Art und / oder Größe des Kochgefäßes in dem Speicher (22) gespeichert sind, wobei die ausgesendeten Signale Leistungssollwerte sind.

8. Anordnung, die aus mindestens einem Kochgefäß (1) und einer Vorrichtung zum Kochmanagement (20) nach einem der vorstehenden Ansprüche gebildet ist.

9. Anordnung nach Anspruch 8, **dadurch gekennzeichnet, dass** das Kochgefäß (1) einen Griff (7) aufweist, wobei die Vorrichtung zum Kochmanagement (20) an dem Griff (7) angeordnet ist.

10. Anordnung nach einem der Ansprüche 8 bis 9, **dadurch gekennzeichnet, dass** das Kochgefäß (1) eine elektrische Komponente (40, 65) aufweist, die eine elektrische Charakteristik R1 vorweist, die den Typ und / oder die Größe des Kochgefäßes (1) definiert, wobei das Erkennungssystem (21) angepasst ist, die elektrische Charakteristik R1 zu messen, um den Typ und / oder die Größe des Kochgefäßes (1) zu erkennen.

11. Anordnung nach Anspruch 10, **dadurch gekennzeichnet, dass** die elektrische Komponente durch einen elektrischen Widerstand (65) oder einen Temperatursensor (40), insbesondere ein Thermoelement, gebildet ist, und dass die elektrische Charakteristik R1 ein Widerstandswert ist.

12. Anordnung nach einem der Ansprüche 8 bis 9, **dadurch gekennzeichnet, dass** das Kochgefäß (1) eine mechanische Komponente aufweist, die eine mechanische Charakteristik C1 vorweist, die den Typ und / oder die Größe des Kochgefäßes (1) definiert, wobei das Erkennungssystem (21) angepasst ist, um die mechanische Charakteristik C1 zu messen, um den Typ und / oder die Größe des Kochgefäßes (1) zu erkennen.

13. Anordnung nach Anspruch 12, **dadurch gekennzeichnet, dass** die mechanische Komponente durch mindestens einen Block gebildet ist, und dass die mechanische Charakteristik das Vorhandensein oder Nichtvorhandensein des Blocks ist.

14. Anordnung, die aus einer Heizplatte (50), mindestens einem Kochgefäß (1) und einer Vorrichtung zum Kochmanagement (20) nach einem der vorstehenden Ansprüche gebildet ist.

15. Verfahren zum Kochmanagement von einem Lebensmittel, das in einem Kochgefäß (1) für Lebensmittel angeordnet ist, das mit einer Heizplatte (50) zusammenwirkt, wobei das Kochgefäß (1) eine Vorrichtung zum Kochmanagement (20) aufweist, die eingerichtet ist, Signale auszusenden, die dazu bestimmt sind, entweder die Heizplatte (50) zu steuern oder den Benutzer aufzufordern, auf die Heizplatte (50) und / oder die Lebensmittel, die gerade gekocht werden, einzuwirken, **dadurch gekennzeichnet, dass** das Verfahren einen Schritt zum Erkennen des Typs und / oder der Größe des Kochgefäßes (1), auf dem sie angeordnet ist, durch die Vorrichtung zum Kochmanagement (20) umfasst, wobei die Vorrichtung zum Kochmanagement (20) ein Erkennungssystem (21) aufweist, das auf die Vorrichtung zum Kochmanagement (20) einwirkt, um die ausgesendeten Signale in Abhängigkeit von dem Typ und / oder der Größe des erkannten Kochgefäßes (1) anzupassen.

## Claims

1. Food cooking management device (20) intended to be removably arranged on a cooking vessel (1) engaging with a heating plate (50), said cooking management device (20) being designed to emit signals intended either for controlling the heating plate (50) or for prompting the user to control the heating plate (50) and/or the food being cooked, **characterised in that** the cooking management device (20) comprises a system for recognising (21) the type and/or the size of the cooking vessel (1) on which it is arranged, said recognition system (21) controlling the cooking management device (20) so as to adjust the signals emitted based on the type and/or the size of the recognised cooking vessel (1).

2. Cooking management device (20) according to claim 1, **characterised in that** the recognition system (21) comprises a memory (22) wherein a table is stored comprising ranges of values of a characteristics of the cooking vessel each associated with a type and/or a size of the cooking vessel and **in that** the recognition system (21) is designed to detect a value of the characteristic of the cooking vessel (1) and to deduce therefrom the type and/or the size of the cooking vessel whereon it is installed from the ranges of values stored on the memory (22), said characteristic being in particular electrical and/or mechanical and/or optical.

3. Cooking management device (20) according to any preceding claim, **characterised in that** it comprises a radio wave transmitter (23), in particular of the Bluetooth® type, in order to emit signals intended either for controlling the heating plate (50) or for prompting the user to control the heating plate (50) and/or the food being cooked.

4. Cooking management device (20) according to any preceding claim **characterised in that** it comprises a display (30) and/or audible means to prompt the user to control the heating plate (50) or the food being cooked.

5. Cooking management device (20) according to any preceding claim, **characterised in that** it comprises a starting member (28), with the recognition system (21) being activated during the starting.

6. Cooking management device (20) according to any of claims 2 to 5, **characterised in that** it comprises means of connection, in particular pads (25, 26, 27), connected to the recognition system, said means of connection being intended to engage with an electrical component arranged on the cooking vessel, in particular a temperature sensor (40) or a resistance (65).

7. Cooking management device (20) according to any of claims 2 to 6, **characterised in that** power values and/or curves according to the type and/or the size of the cooking vessel are stored in the memory (22), the signals emitted being power setpoints.

8. Assembly formed by at least one cooking vessel (1) and a cooking management device (20) according to any preceding claim.

9. Assembly according to claim 8, **characterised in that** the cooking vessel (1) comprises a handle (7), the cooking management device (20) being arranged on the handle (7).

10. Assembly according to any of claims 8 to 9, **characterised in that** the cooking vessel (1) comprises an electrical component (40, 65) that has an electrical characteristic R1 defining the type and/or the size of the cooking vessel (1), the recognition system (21) being adapted to measure the electrical characteristic R1 in order to recognise the type and/or the size of the cooking vessel (1).

11. Assembly according to claim 10, **characterised in that** the electrical component is formed by an electrical resistance (65) or a temperature sensor (40), in particular a thermocouple, and **in that** the electrical characteristic R1 is an ohmic value.

12. Assembly according to any of claims 8 to 9, **characterised in that** the cooking vessel (1) comprises a mechanical component that has a mechanical characteristic C1 defining the type and/or the size of the cooking vessel (1), the recognition system (21) being adapted to measure the mechanical characteristic C1 in order to recognise the type and/or the size of the cooking vessel (1).

13. Assembly according to claim 12, **characterised in that** the mechanical component is formed by at least one pad, and **in that** the mechanical characteristic is the presence or absence of the pad.

14. Assembly formed by a heating plate (50), at least one cooking vessel (1) and a cooking management device (20) according to any preceding claim.

15. Food cooking management method arranged in a food cooking vessel (1) engaging with a heating plate (50), said cooking vessel (1) comprising a cooking management device (20) designed to emit signals intended either for controlling the heating plate (50) or for prompting the user to control the heating plate (50) and/or the food being cooked, **characterised in that** the method comprises a step of recognition by the cooking management device (20) of the type and/or of the size of the cooking vessel (1) whereon it is arranged, said cooking management device (20) comprising a recognition system (21) that controls the cooking management device (20) in order to adapt the signals emitted according to the type and/or the size of the recognised cooking vessel (1).
